# EUROPÄISCHE PATENTSCHRIFT

(11) **EP 1 425 610 B1**
(45) Veröffentlichungstag und Bekanntmachung des Hinweises auf die Patenterteilung: **21.03.2012**
(21) Anmeldenummer: 02754465.9
(22) Anmeldetag: 01.08.2002
(51) Int. Cl.: G01T 1/208

(54) **VERFAHREN ZUM AUSLESEN VON MESSSIGNALEN AUS VIELKANAL-PHOTOMULTIPLIER SOWIE SCHALTUNG DAFÜR**
METHOD FOR EXTRACTING MEASURING SIGNALS FROM A MULTI-CHANNEL PHOTOMULTIPLIER AND CORRESPONDING CIRCUIT
PROCEDE POUR EXTRAIRE DES SIGNAUX DE MESURE DANS UN PHOTOMULTIPLICATEUR MULTI-CANAUX ET CIRCUIT PREVU A CET EFFET

(30) Priorität: 11.09.2001 DE 10144764
(43) Veröffentlichungstag der Anmeldung: 09.06.2004
(73) Patentinhaber: Forschungszentrum Jülich, 52428 Jülich (DE)
(72) Erfinder: STREUN, Matthias, 52066 Aachen (DE); LARUE, Horst, NL-6462 HX Kerkrade (NL)
(86) Internationale Anmeldenummer: PCT/DE2002/002820
(87) Internationale Veröffentlichungsnummer: WO 2003/028067

(56) Entgegenhaltungen:
- GB-A- 932 536
- US-A- 4 967 084
- US-A- 5 338 937

## Beschreibung

Die Erfindung betrifft ein Verfahren zum Auslesen von Meßsignalen aus Vierkanal-Photomultipliern gemäß Anspruch 1 sowie eine Schaltung für einen Vielkanal-Photomultiplier gemäß Anspruch 9 mit einer Photokathode, einer Vielkanalstruktur zur Elektronenvervielfachung (Dynode) und den Kanälen zugeordneten Anoden zur pixelorientierten Ladungsverstärkung und - Sammlung. Die Erfindung betrifft weiter ein Verfahren zum Auslesen von Meßsignalen aus Halbleiter-Detektoren gemäß Anspruch 16.

Aus der US 4,967,084 ist ein Szintillationsmessgerät mit einem ersten und einem zweiten Detektor bekannt.

Photomultiplier können kleinste Lichtereignisse in elektrische Signale umwandeln, indem einzelne, von Protonen ausgelöste Elektronen im Vakuum der Photomultiplier-Röhre beschleunigt werden und an sog. Dynoden eine Lawine von Sekundärelektronen erzeugen. Bei Vielkanal-Photomultipliern (kurz MCPMT genannt) sind die elektronenveivlefachenden Stufen der Dynode zu einzelnen Kanälen ausgebildet. Jedem Eintrittsbereich auf der Photokathode ist somit ein Anodenpin am Ausgang zugeordnete. Der Vielkanal-Photomultiplier verhält sich damit wie eine Vielzahl dichtgepackter einzelner Photomultiplier. Eine Kopplung der Kanäle besteht lediglich darin, daß die die Dynode bildenden Kanäle jeweils elektrisch miteinander verbunden sind. Die an den isolierten Anoden der Kanäle eintreffenden Ladungen stellen somit ein erheblich verstärktes Abbild der Lichtverteilung auf der Photokathode dar, wobei eine ortsgenaue Zuordnung der Lichtereignisse durch die Kanal-Pixelung gegebenist.

Mit Vielkanal-Photomultipliern kann daher eine ortsaufgelöste Erfassung von Szintillationsereignissen, wie sie beispielsweise für die Nuklearmedizin erforderlich sind, erreicht werden.

Bekannt sind positionssensitive Detektoren, wie sie beispielsweise in Kleintier-PET-Scannern Verwendung finden. Sie wenden ortsempfindliche Photomultiplier und werden nach dem Prinzip der Schwerpunktbildung ausgelesen. Bei diesen Photomultipliern läuft die sich verstärkende E-lektronenwolke nicht wie beim Vielkanal-Photomultiplier innerhalb getrennter Kanäle, sondern lediglich die Anode ist unterteilt und meist in Form eines Drahtgitters ausgebildet. Je nach Position des Lichtereignisses entstehen nun unterschiedlich hohe Ladungen an den einzelnen Drähten des Gitters, wobei die jeweils parallel liegenden Drähte mittels einer Widerstandsleiter zusammengefaßt werden. Aus dem Verhältnis der Pulsintensitäten an den Leiterenden kann dann der Ort in jeweils einer Dimension der Detektorfläche entsprechend einer Schwerpunktbildung bestimmt werden. Die Information über die Gesamtladung wird dabei aus der Summe der vier Pulse abgeleitet.

Die Signalauslesung nach dem Prinzip der Schwerpunktbildung benötigt dabei bereits vier Analog-Digital-Wandlerkanäle für einen einzigen ortsempfindlichen Photomultiplier. Ferner ist dieses Prinzip empfindlich gegen Störsignale, da zusätzlich zum zu erfassenden Intensitätsbereich des Lichtpulses auch die Ortsinformation als Pulshöhenvariation codiert ist und somit sehr kleine Pulse auftreten können. Entsprechend muß die Dynamik des Meßwertumfanges hohen Anforderungen genügen. Darüber hinaus bedingen die an den Drahtgitteranoden anliegenden Widerstandsleitern eine ungleiche Impedanz an den Anoden, die ortsabhängige Pulsformverzerrungen verursachen können. Entsprechend können Probleme bei Anwendungen auftreten, die eine Pulsformanalyse erfordern. Weiter ist bei dem Ausleseverfahren nach der Schwerpunktbildung nachteilig, daß nicht unterschieden werden kann, ob ein Lichtpuls punktförmig an einem Ort oder räumlich verschmiert bzw. simultan an mehreren Orten auftritt. Letzteres kann beispielsweise auftreten, wenn ein Gamma-Teilchen in einem Szintillator gestreut wird und anschließend an einer davon entfernten Stelle ein zweites Mal szintilliert.

Ferner ist bei Vielkanal-Photomultipliern erkennbar, daß jeder Kanal ein separates Ausgangssignal liefert. Entsprechend könnte pixelorientiert das entsprechende Meßsignal in Form und Intensität erfaßt werden. Bei einer großen Pixelzahl wäre damit allerdings eine aufwendige Ausleseelektronik vorzusehen und für eine weitere Datenverarbeitung auch für jeden Kanal ein Analog-Digital-Wandler erforderlich. Entsprechend könnten somit lediglich äußerst kleine Systeme mit geringer Pixelanzahl mit einer derartigen Auslesemethode arbeiten. Alternativ könnten die integrierten Pulse auf Sample-and-Hold-Stufen integriert werden, um sie anschließend über einen Multiplexer auszulesen. Dabei ist jedoch nachteilig, daß die Information über Pulsform und dem genauen Zeitpunkt des Pulses verloren gehen. Außerdem wird durch die serielle Auslese die maximal verarbeitbare Ereignisrate stark beschränkt.

Aufgabe der Erfindung ist es daher ein Ausleseverfahren und eine Schaltung für Vielkanal-Photomultiplier anzugeben, mit dem/der eine pixelorientierte Signalerfassung einschließlich Auswertung von Pulsintensität und - form mit geringem Aufwand möglich ist.

Diese Aufgabe wird mit einem Verfahren gelöst, das die folgenden Schritte aufweist:
- Abgreifen eines für die Kanäle des Photomultiplier integralen Meßsignals an der Dynode zur Aufnahme der Signalform und -intensität eines Ereignisses sowie
- Vergleichen des Anodensignals jedes Kanals mit einem Schwellenwert,
- wobei mit Überschreiten des Schwellenwertes an einem Kanal der Ort des detektierten Ereignisses festgestellt und die dazugehörige Signalform und -intensität an der Dynode erfaßt wird.

Des weiteren wird die Aufgabe bei einer eingangs genannten Schaltung dadurch gelöst, daß zum Abgreifen eines Meßsignals eine Kontaktierung zur Dynode und je Kanal der Anode eine Vergleichsschaltung (Komparator) vorgesehen sind.

Durch das Abgreifen des an der Dynode anliegenden Signals kann die Pulsintensität und -form eines Ereignisses unabhängig vom Ort des Ereignisses erfaßt werden. Der Spannungsverlauf an der Dynode entspricht nämlich dem Strompuls an der Anode und besitzt lediglich umgekehrte Polarität. Dabei erscheint an der Dynode jeder Puls unabhängig davon, in welchem Kanal das Ereignis stattfand. Somit reicht zur Erfassung der Signalform und -intensität die Auswertung des an der Dynode anliegenden Summensignals aus. Um jedoch gleichwohl eine örtliche Zuordnung des gemessenen Ereignisses zu ermöglichen, wird das Anodensignal jedes Kanals mit einem Schwellenwert verglichen, um beim Überschreiten des Schwellenwertes an einem Komparator den zugehörigen Kanal als pixelorienterierten Ort des Ereignisses festzustellen und gleichzeitig die zu diesem Ereignis gehörende Signalform und -intensität an der Dynode zu erfassen.

Gegenüber einer Vielkanal-Photomultiplier-Schaltung, bei der für jeden Kanal eine getrennte Auswerteelektronik vorgesehen ist, kommt die erfindungsgemäße Schaltung mit nur einer Signalform und -intensität erfassenden Auswertung des für alle Kanäle integralen Dynodensignals und einer einfachen Vergleichsschaltung für jede einem jeweiligen Kanal zugeordnete Anode aus.

Verfahrensgemäß wird die Erfindung dadurch weitergebildet, daß bei Überschreitung des Schwellenwertes ein logisches Bit je betreffenden Kanal gesetzt wird. Das jedem Kanal zugeordnete Bit erlaubt in einfachster digitaler Art die zeitliche Bestimmung des Ereignisses und über die Zuordnung des zum jeweiligen Bit gehörenden Kanals die pixelorientierte flächige Zuordnung des Ereignisses.

Dadurch, daß bei einem gesetzten Bit die Signalform und - intensität an der Dynode ausgelesen wird, wird die Auslesung der Signalform und -intensität an der Dynode durch die Registrierung eines Ereignisses (Überschreitung des Schwellenwertes an wenigstens einem Kanal) erreicht.

Wenn die an der Dynode abgegriffene Signalform und -intensität kontinuierlich zwischengespeichert wird, wird sichergestellt, daß auch der Teil der Signalform vom Meßsystem erfaßt wird, der zeitlich noch vor dem Setzen des logischen Bits bei Überschreiten des Schwellenwertes lag. Bevorzugt wird diese Zwischenspeicherung mit einer sog. freilaufenden Digitalisierung erreicht, bei der das Dynodensignal über einen Analog-Digital-Wandler permanent an ein Schiebe- oder Ringregister übertragen wird.

Bevorzugt wird die Signalform und -intensität an der letzten Stufe der Dynode abgegriffen, da dort das elektrische Signal am stärksten ist.

Beim Auslesen eines Vielkanal-Photomultipliers, der mit einer Matrix aus einzelnen Szintillator-Kristallen bestückt ist, kann leider eine perfekte Kanaltrennung nicht erreicht werden. Mögliche Ursachen dafür sind die begrenzte optische Isolation der Kristalle gegeneinander, die ungenaue Plazierung der Kristalle über den Kanälen, ein Kanalübersprechen innerhalb des Photomultipliers und kapazitives Übersprechen zwischen den Leitungen der Auswerteelektronik. Diese Kanaltrennungsfehler führen bei der Einzelkanaltriggerung zu fehlerhaften Ergebnissen, wenn ein kleiner Schwellenwert (Triggerschwelle) gewählt wird, da diese geringe Triggerschwelle bereits von einem nur durch Übersprechen verursachten Signal überschritten werden kann.

Entsprechend wird in weiterer Ausgestaltung der Erfindung vorgeschlagen, daß das Meßsignal der Dynode invertiert und bedarfsweise verstärkt auf den Schwellenwert aufmoduliert wird. Damit wird nun das an der Dynode ausgekoppelte Meßsignal auf den Schwellenwert aufgelegt. Die Triggerschwelle wird somit kurzzeitig erhöht, und die mit dem Primärsignal gleichzeitig auftretenden Signale müssen diesen erhöhten Schwellenwert überschreiten, um als zu registrierendes Ereignis gewertet zu werden. Wählt man den ausgekoppelten Anteil des Primärsignals größer als das maximal auftretende Übersprechverhältnis, so wird die Erfassung von Übersprechsignalen vollständig unterdrückt. Durch diese Aufmodulation des an der Dynode abgegriffenen Meßsignals entstehen gleichwohl keinerlei Beschränkungen für den nachweisbaren Dynamikbereich des Primärsignals.

Wenn das an der Dynode abgegriffene Signal digitalisiert wird und die Meßdaten für die Ortsbestimmung (logisches Bit) sowie die Signalform und -intensität digital weiterverarbeitet werden, wird eine flexible Auswertung der Meßsignale mit einer digitalen Datenakquisition erreicht.

Vorrichtungsgemäß wird die Erfindung dadurch weitergebildet, daß die Kontaktierung zur Dynode an der letzten Stufe der Dynode angeordnet ist, womit ein maximal verstärktes Signal für die Weiterverarbeitung abgreifbar ist.

Wenn für die Vergleichsschaltung eine Spannungsquelle mit einer voreinstellbaren Schwellenspannung vorgesehen ist, kann der Schwellenwert je nach Verwendung der Schaltung für unterschiedliche Anwendungen auf entsprechend voreinstellbare Schwellenspannungen eingestellt werden.

Wenn an der Kontaktierung zur Dynode ein Meßsignalverstärker angeschlossen ist, wird eine Beeinflussung des Meßsignals innerhalb des Photomultipliers aufgrund des Abgreifens des Dynodensignals vermieden.

Zur weiteren digitalen Signalverarbeitung ist es vorteilhaft, daß für die Meßsignalverarbeitung an der Kontaktierung zur Dynode ein Analog-Digital-Wandler, bevorzugt mit vorgeschaltetem Tiefpassfilter, sowie zum Zwischenspeichern des digitalisierten Meßsignals ein Schiebe- oder Ringregister vorgesehen sind. Der Tiefpassfilter dient zur Erfüllung der Nyquist-Bedingung bei der anschließenden Digitalisierung entsprechend der gewählten Samplingrate. Mit dem Schiebe- oder Ringregister wird eine freilaufende Digitalisierung sichergestellt, womit bereits Teile des zu registrierenden Pulses erfaßt werden, die zeitlich noch vor dem Überschreiten des Schwellenwertes (Auftritt des Triggersignals) liegen.

Dadurch, daß eine Triggerschaltung vorgesehen ist, mit der das Auslesen des Registers ausgelöst wird, wird die zeitliche Zuordnung des registrierten Ereignisses sowie die dazugehörige Aufzeichnung der Signalform und -intensität aus dem Register erreicht. Ggf. wird durch eine zeitliche Verzögerungsschaltung das vollständige Eintreffen der aufzunehmenden Signalform im Register abgewartet um das Signal in der gewünschten Signallänge zu registrieren.

Wenn zwischen der Kontaktierung der Dynode und der Spannungsquelle für die Schwellenspannung ein invertierender Verstärker angeordnet ist, der der Schwellenspannung das an der Dynode ausgekoppelte Summensignal aufmoduliert, wird eine meßwertabhängige Erhöhung des Schwellenwertes realisiert, um Übersprechsignale auf zum das eigentliche Ereignis detektierenden Kanal benachbarten Kanälen ausblenden zu können.

Das zuvor beschriebene erfindungsgemäße Verfahren ist nicht notwendigerweise auf das Auslesen von Meßsignalen aus Vielkanal-Photomultipliern beschränkt. Es läßt sich auch gut für Halbleiter-Detektoren wie beispielsweise Photo-Dynoden verwenden. Hierbei muß dann das fehlende Dynodensignal von einem analogen Addierer (Summierverstärker) generiert werden, der die Signale der einzelnen Halbleiter-Pixel aufsummiert. Im übrigen entspricht das Ausleseverfahren für Halbleiter-Detektoren den zuvor beschriebenen Verfahren.

Bezüglich weiterer vorteilhafter Ausgestaltungen der Erfindung wird auf die Unteransprüche sowie die nachfolgende Beschreibung von zwei Ausführungsbeispielen anhand der Zeichnungen verwiesen. In der Zeichnung zeigt:
- Fig. 1: ein Prinzipschaltbild der erfindungsgemäßen Auslese von Meßsignalen aus einem Vielkanal-Photomultiplier und
- Fig. 2: ein Prinzipschaltbild entsprechend Fig. 1 zusätzlich mit einer Übersprech-Unterdrückung.

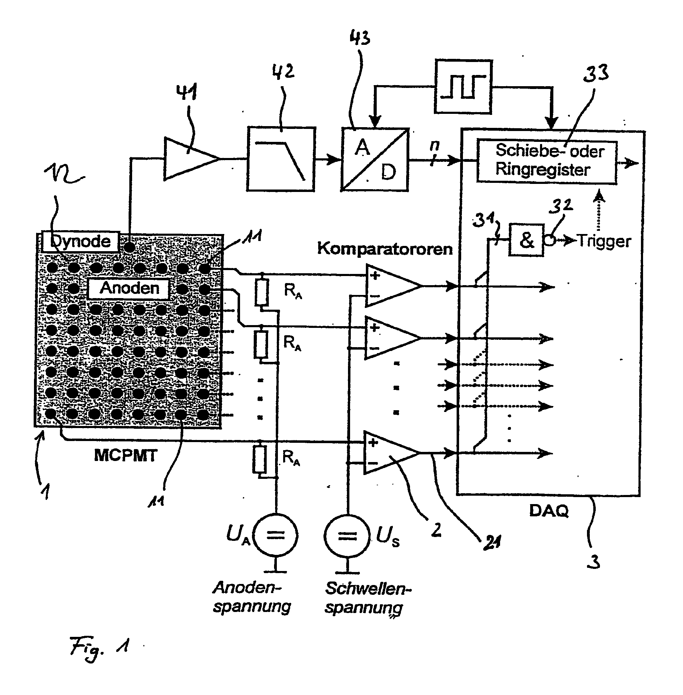

In Fig. 1 ist ein Prinzipschaltbild zum Auslesen von Meßsignalen aus einem Vielkanal-Photomultiplier dargestellt. Ein Vielkanal-Photomultiplier 1 ist schematisch mit einer pixelorientierten 8x8 Anodenanordnung 11 dargestellt, wobei zusätzlich eine Kontaktierung zur letzten Stufe der Dynode 12 des Vielkanal-Photomultiplier 1 angedeutet ist. Jede einem Pixel zugeordnete Anode 11 ist über je einen Widerstand R_{A} mit der Gleichspannung U_{A} als Anodenspannung vorgespannt. Gleichzeitig ist jede Anode 11 an einen Komparator 2 angeschlossen, dessen Vergleichspotential über eine Spannungsquelle auf die Schwellenspannung U_{S} gelegt ist.

Trifft eine negative Ladungswolke (Elektronen) an einer Anode 11 ein, so erzeugt der über R_{A} abfließende Strom einen negativen Spannungspuls. Wird dabei die Schwellenspannung U_{S} unterschritten, so ändert der nachgeschaltete Komparator 2 seinen Ausgangszustand (logisches Bit) und gibt damit Auskunft über ein Ereignis am entsprechenden Kanal. Die Ansprechempfindlichkeit kann dabei durch Variation der Spannungsdifferenz U_{A}-U_{S} angepaßt werden, wobei U_{S}<U_{A} gelten muß.

Komparatorausgänge 21 der Komparatoren 2 liefern als Meßsignal je ein logisches Bit an eine digitale Datenauswertung 3. Dabei zeigt ein gesetztes logisches Bit (hier aktiv low) an, daß ein Ereignis zu einem bestimmten Zeitpunkt aufgetreten ist, und liefert darüber hinaus durch die Zuordnung des gesetzten logischen Bits zu einem bestimmten Kanal die pixelorientierte Ortsinformation. Dabei wird mit einer NAND-Verknüpfung aller Kanäle in der Datenauswerteeinheit 3 ein Triggersignal generiert, das Auskunft darüber gibt, ob ein Ereignis stattgefunden hat. Wenn ein Ereignis gemäß Triggersignal 32 stattgefunden hat, wird für weitere Informationen bezüglich Pulsform, genaueren Zeitpunkt und Gesamtladung des Pulses das gespeicherte und digitalisierte Dynodensignal verwendet.

An der Kontaktierung 12 für das Dynodensignal ist ein Meßsignalverstärker 41, daran anschließend ein Tiefpassfilter 42 und daran anschließend ein Analog-Digital-Wandler 43 angeschlossen. Entsprechend wird das Dynodensignal verstärkt und im Tiefpassfilter zur Erfüllung der Nyquist-Bedingung gefiltert, um anschließend in dem Analog-Digital-Wandler 43 digitalisiert zu werden.

In der Datenauswerteeinheit 3 ist ein Schiebe- oder Ringregister 33 vorgesehen, auf dem fortlaufend die an der Dynodenkontaktierung 12 anliegenden Meßsignale über den Analog-Digital-Wandler 43 digital zwischengespeichert werden.

Wird nun das Triggersignal 32 eines Ereignisses in der Datenauswertung 3 ausgelöst, können auch zeitlich noch vor dem Triggersignal liegende Pulsteile der zu registrierenden Pulsform aus dem Schiebe- oder Ringregister 33 ausgelesen werden. Dabei veranlaßt das Triggersignal 32 das Auslesen des Registers 33 mit einer Verzögerung, so daß zum Auslesezeitpunkt der zeitlich vollständige Puls im Register aufgenommen ist. Somit gehört zu jedem mit dem Vielkanal-Photomultiplier aufgenommenen Ereignis ein Datensatz bestehend aus dem digitalisierten Puls, der die Signalform und -intensität angibt, und dem Bitmuster der Kanalbits, die die pixelorientierte Ortsbestimmung des Ereignisses zulassen. Dieser Datensatz kann zur digitalen Weiterverarbeitung per Hard- und Software zur Verfügung gestellt werden.

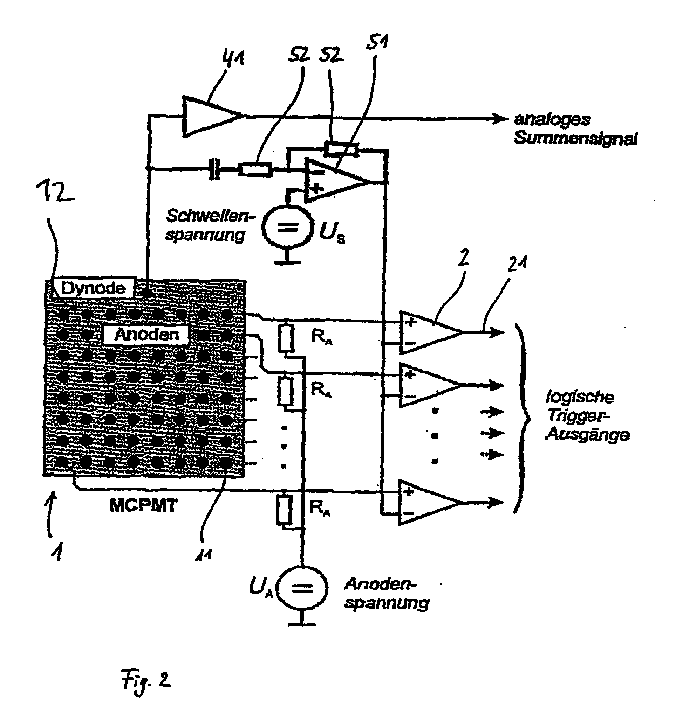

In Fig. 2 ist ein Prinzipschaltbild zur Auslese von Meßsignalen eines Vielkanal-Photomultiplier entsprechend Fig. 1 mit einer zusätzlichen Übersprech-Unterdrückung angegeben. Einander entsprechende Bauteile sind mit gleichen Bezugszeichen bezeichnet.

In Erweiterung der zu Fig. 1 beschriebenen Schaltung ist ein invertierender Verstärker 51 so verschaltet, daß der Schwellenspannung U_{S} das an der Kontaktierung 12 der Dynode ausgekoppelte integrale Meßsignal aufmoduliert wird. Der invertierende Verstärker 51 ist erforderlich, da an den Anoden negative Strompulse auftreten, das Signal an der Dynodenkontaktierung 12 jedoch positive Polarität besitzt. Durch Gegenkopplungswiderstände 52 wird eine Verstärkung bzw. Dämpfung des Verstärkers eingestellt. Die Einstellung wird dabei so gewählt, daß gerade alle Übersprechsignale unterdrückt werden.

## Patentansprüche

1. Verfahren zum Auslesen von Meßsignalen aus einem Vielkanal-Photomultiplier, **gekennzeichnet durch** die Schritte:
- Abgreifen eines für die Kanäle des Photomultiplier integralen Meßsignals
an der Dynode zur Aufnahme der Signalform und -intensität eines Ereigrisses sowie
- Vergleichen des Anodensignals jedes Kanals mit einem Schwellenwert,
- wobei mit Überschreiten des Schwellenwertes an einem Kanal der Ort des detektierten Ereignisses festgestellt und die dazugehörige Signalform und -intensität an der Dynode erfaßt wird.

2. Verfahren nach Anspruch 1, **dadurch gekennzeichnet, daß** bei überschreitung des Schwellenwertes ein logisches Bit je betreffenden Kanal gesetzt wird.

3. Verfahren nach Anspruch 2, **dadurch gekennzeichnet, daß** bei einem gesetzten Bit die Signalform und -intensität an der Dynode ausgelesen wird.

4. Verfahren nach Anspruch 1, 2 oder 3, **dadurch gekennzeichnet, daß** die an der Dynode abgegriffene Signalform und -Intensität kontinuierlich zwischengespeichert wird.

5. Verfahren nach Anspruch 4, **dadurch gekennzeichnet, daß** das Auslesen der Signalform zeitlich verzögert wird.

6. Verfahren nach einem der vorangehenden Ansprüche, **dadurch gekennzeichnet, daß** die Signalform und -intensität an der letzten Stufe der Dynode abgegriffen wird.

7. Verfahren nach einem der vorangehenden Ansprüche, **dadurch gekennzeichnet, daß** das Meßsignal der Dynode invertiert und bedarfsweise verstärkt auf den Schwellenwert aufmoduliert wird.

8. Verfahren nach einem der vorangehenden Ansprüche, **dadurch gekennzeichnet, daß** das an der Dynode abgegriffene Signal digitalisiert wird und die Meßdaten für die Ortsbestimmung (logisches Bit) sowie die Signalform und-Intensität digital weiterverarbeitet werden.

9. Schaltung für einen Vielkanal-Photomultiplier (1) zur Durchführung des Verfahrens nach einem der Ansprüche 1 bis 8 mit einer Photokathode, eine Vielkanalstruktur bildende Dynode zur Elektronenvervielfachung und den Kanälen zugeordneten Anoden (11) zur pixelorientierten Ladungsverstärkung und - Sammlung, **dadurch gekennzeichnet, daß** zum Angreifen eines für die Kanäle des Photomultiplier integralen Meßsignals und zur Aufnahme der Signalform und -intensität eines Ereignisses eine Kontaktierung zur Dynode (12) und zum Vergleichen des Anodensignals jedes Kanals mit einem Schwellenwert je Kanal der Anode (11) eine Vergleichsschaltung (Komparator) (2) vorgesehen sind.

10. Schaltung nach Anspruch 9, **dadurch gekennzeichnet, daß** die Kontaktierung zur Dynode (12) an der letzten Stufe der Dynode (12) angeordnet ist.

11. Schaltung nach Anspruch 9 oder 10, **dadurch gekennzeichnet, daß** für die Vergleichsschaltung eine Spannungsquelle mit einer voreinstellbaren Schwellenspannung vorgesehen ist.

12. Schaltung nach Anspruch 9, 10 oder 11, **dadurch gekennzeichnet, daß** an der Kontaktierung zur Dynode (12) ein Meßsignalverstärker (41) angeschlossen ist.

13. Schaltung nach Anspruch 9, 10, 11 oder 12, **dadurch gekennzeichnet, daß** für die Meßsignalverarbeitung an der Kontaktierung zur Dynode (12) ein Analog-Digital-Wandler (43), bevorzugt mit vorgeschaltetem Tiefpassfilter (42), sowie zum Zwischenspeichern des digitalisierten Meßsignals ein Schiebe- oder Ring-register (33) vorgesehen sind.

14. Schaltung nach Anspruch 13, **dadurch gekennzeichnet, daß** eine Triggerschaltung (31) vorgesehen ist mit der das Auslesen des Registers (33) ausgelöst wird.

15. Schaltung nach Anspruch 11, 12, 13 oder 14, **dadurch gekennzeichnet, daß** zwischen der Kontaktierung der Dynode (12) und der Spannungsquelle für die Schwellenspannung ein invertierender Verstärker (51) angeordnet ist, der der Schwellenspannung das an der Dynode (12) ausgekoppelte Summensignal aufmoduliert.

16. Verfahren zum Auslesen von Meßsignalen aus Halbleiter-Detektoren, insbesondere Photo-Dioden, **gekennzeichnet durch** die Schritte:
- Abgreifen eines für die Kanäle des Halbleiter - Detektors integralen Meßsignals an einem Summierverstärker zur Aufnahme der Signalform und - intensität eines Ereignisses sowie
- Vergleichen des Anodensignals jedes Kanals mit einem Schwellenwert,
- wobei mit Überschreiten des Schwellenwertes an einem Kanal der Ort des detektierten Ereignisses festgestellt und die dazugehörige Signalform und - intensität an dem Summierverstärker erfaßt wird.

## Claims

1. Method for extracting measuring signals from a multi-channel photomultiplier, **characterised by** the steps:
- measuring off an integral measuring signal for the channels of the photomultiplier on the dynode to detect the signal form and intensity of an event and
- comparing the anode signal of each channel with a threshold value,
- in which, when the threshold value is exceeded on a channel, the location of the event detected is established and the relevant signal form and intensity is detected on the dynode.

2. Method according to claim 1, **characterised in that**, when the threshold value is exceeded, a logic bit is set for each channel concerned.

3. Method according to claim 2, **characterised in that**, when a bit is set, the signal form and intensity is extracted on the dynode.

4. Method according to claim 1, 2 or 3, **characterised in that** the signal form and intensity measured off on the dynode are subject to continuous intermediate storage.

5. Method according to claim 4, **characterised in that** extraction of the signal form is subject to a time lag.

6. Method according to one of the previous claims, **characterised in that** the signal form and intensity are measured off on the last stage of the dynode.

7. Method according to one of the previous claims, **characterised in that** the measuring signal of the dynode is modulated to the threshold value and inverted and amplified if necessary.

8. Method according to one of the previous claims, **characterised in that** the signal measured off on the dynode is digitalised and the measuring information for determining the location (logic bit) and the signal form and intensity is digitally processed.

9. Circuit for a multi-channel photomultiplier (1) for carrying out the method according to one of claims 1 to 8 with a photocathode, a dynode forming a multi-channel structure for electron duplication and anodes (11) allocated to the channels for pixel orientated charge amplification and collection, **characterised in that** a contact to the dynode (12) is provided for measuring off an integral measuring signal for the channels of the photomultiplier and for detecting the signal form and intensity of an event and a comparison circuit (comparator) (2) is provided for comparing the anode signal of each channel with a threshold value for each channel of the anode (11).

10. Circuit according to claim 9, **characterised in that** the contact to the dynode (12) is arranged on the last stage of the dynode (12).

11. Circuit according to claim 9 or 10, **characterised in that** a source of voltage with a threshhold voltage, which may be preset, is provided for the comparison circuit.

12. Circuit according to claim 9, 10 or 11, **characterised in that** a measuring signal amplifier (41) is connected to the contact to the dynode (12).

13. Switch according to claim 9, 10, 11 or 12, **characterised in that** an analog digital converter (43) is provided for processing the measuring signal on the contact to the dynode (12), preferably with a deep pass filter (42) upstream, and a disc or ring register (33) is provided for intermediate storage of the digitalised measuring signal.

14. Circuit according to claim 13, **characterised in that** a trigger circuit (31) is provided, with which extraction of the register (33) is triggered.

15. Circuit according to claim 11, 12, 13 or 14; **characterised in that** an inverting amplifier (51) is arranged between the contact to the dynode (12) and the source of voltage for the threshold voltage, which modulates the aggregate signal uncoupled to the dynode (12) to the threshold voltage.

16. Method for extracting measuring signals from semi-conductor detectors, particularly photodiodes, **characterised by** the steps:
- measuring off an integral measuring signal for the channels of the semi-conductor detector on a summing amplifier to detect the signal form and intensity of an event and
- comparing the anode signal of each channel with a threshold value,
- in which, when the threshold value is exceeded on a channel, the location of the event detected is established and the relevant signal form and intensity is detected on the summing amplifier.

## Revendications

1. Procédé d'extraction de signaux de mesure dans des photomultiplicateurs multicanaux, **caractérisé par** les étapes suivantes :
- saisie d'un signal de mesure intégré pour les canaux du photomultiplicateur au niveau de la dynode, afin d'enregistrer la forme et l'intensité de signal d'un événement,
- comparaison du signal d'anode de chaque canal avec une valeur seuil,
- où, en cas de dépassement de la valeur seuil sur un canal, le lieu de l'événement détecté est déterminé et la forme et l'intensité de signal correspondantes sont saisies au niveau de la dynode.

2. Procédé selon la revendication 1, **caractérisé en ce qu'**en cas de dépassement de la valeur seuil, un bit logique est fixé par canal concerné.

3. Procédé selon la revendication 2, **caractérisé en ce qu'**en cas de bit fixé, la forme et l'intensité de signal sont extraites au niveau de la dynode.

4. Procédé selon la revendication 1, 2 ou 3, **caractérisé en ce que** la forme et l'intensité de signal saisies au niveau de la dynode sont sauvegardées en mémoire temporaire de manière continue.

5. Procédé selon la revendication 4, **caractérisé en ce que** l'extraction de la forme de signal est temporairement retardée.

6. Procédé selon l'une des revendications précédentes, **caractérisé en ce que** la forme et l'intensité de signal sont saisies au niveau du dernier étage de la dynode.

7. Procédé selon l'une des revendications précédentes, **caractérisé en ce que** le signal de mesure de la dynode est inversé et si nécessaire modulé par amplification à la valeur seuil.

8. Procédé selon l'une des revendications précédentes, **caractérisé en ce que** le signal saisi au niveau de la dynode est numérisé et les données de mesure pour la détermination de lieu (bit logique) ainsi que la forme et l'intensité de signal sont traités numériquement.

9. Circuit pour un photomultiplicateur multicanaux (1), pour l'exécution du procédé selon l'une des revendications 1 à 8, avec une photocathode, une dynode (12) formant une structure multicanaux pour la multiplication des électrons, et des anodes (11) associées aux canaux pour l'amplification et la collecte des charges, orientées pixels, **caractérisé en ce que**, pour la saisie d'un signal de mesure intégré pour les canaux du photomultiplicateur et pour l'enregistrement de la forme et de l'intensité de signal d'un événement, est prévue une mise en contact avec la dynode (12), et, pour la comparaison du signal d'anode de chaque canal avec une valeur seuil, un circuit de comparaison (comparateur) (2) par canal de l'anode (11).

10. Circuit selon la revendication 9, **caractérisé en ce que** le contact avec la dynode (12) est disposé au niveau du dernier étage de la dynode (12).

11. Circuit selon la revendication 9 ou 10, **caractérisé en ce qu'**une source de tension avec une tension seuil pré-réglable est prévue pour les circuits de comparaison.

12. Circuit selon la revendication 9, 10 ou 11, **caractérisé en ce qu'**un amplificateur de signal de mesure (41) est connecté au niveau du contact avec la dynode (12).

13. Circuit selon la revendication 9, 10, 11 ou 12, **caractérisé en ce que**, pour le traitement de signal de mesure au niveau du contact avec la dynode (12), est prévu un convertisseur analogique-numérique (43), de préférence avec filtre passe-bas (42) monté en amont, et, pour la sauvegarde en mémoire temporaire du signal de mesure numérisé, un registre à décalage ou en anneau (33).

14. Circuit selon la revendication 13, **caractérisé en ce qu'**un circuit déclencheur (31) est prévu, au moyen duquel l'extraction du registre (33) est déclenchée.

15. Circuit selon la revendication 11, 12, 13 ou 14, **caractérisé en ce qu'**un amplificateur (51) inverseur est disposé entre la mise en contact de la dynode (12) et la source de tension pour la tension seuil, lequel module à la tension seuil le signal de sommation découplé au niveau de la dynode (12).

16. Procédé d'extraction de signaux de mesure dans des détecteurs semi-conducteurs, en particulier des photodiodes, **caractérisé par** les étapes suivantes :
- saisie d'un signal de mesure intégré pour les canaux du détecteur semi-conducteur au niveau d'un amplificateur sommateur, afin d'enregistrer la forme et l'intensité de signal d'un événement,
- comparaison du signal d'anode de chaque canal avec une valeur seuil,
- où, en cas de dépassement de la valeur seuil sur un canal, le lieu de l'événement détecté est déterminé et la forme et l'intensité de signal correspondantes sont saisies au niveau de l'amplificateur sommateur.
